# EUROPÄISCHE PATENTANMELDUNG

(11) **EP 4 763 666 A2**
(43) Veröffentlichungstag der Anmeldung: **24.06.2026**
(21) Anmeldenummer: 25210063.1
(22) Anmeldetag: 21.10.2025
(51) Int. Cl.: B62B 3/06, B62B 3/10, B62B 5/00, B62B 3/00

(54) **LANGGUT-TRANSPORTWAGEN, BEDIENSTATION ZUM BESCHICKEN UND LEEREN VON LANGGUTLAGERN MITTELS LANGGUT-HANDWAGEN UND SYSTEM UMFASSEND DIESELBEN**

(30) Priorität: 17.12.2024 DE 102024138181
(71) Anmelder: Remmert GmbH & Co. KG, 32584 Löhne (DE)
(72) Erfinder: Schmidt, Manuel, 49143 Bissendorf (DE); Kammel, Dirk, 32657 Lemgo (DE)
(74) Vertreter: Manasse, Uwe

(57) **Zusammenfassung**

Langgut-Transportwagen, umfassend:
- einen Langgut-Handwagen, der ein von Hand bewegbares Langgut-Fahrgestell mit mindestens einem Fuß, vorzugsweise zwei Füßen, im Bereich eines Längsendes des Langgut-Fahrgestells, mindestens zwei starren Rollen im Bereich des gegenüberliegenden Längsendes des Landgut-Fahrgestells, mindestes zwei Paaren von höhenverstellbaren, vorzugsweise schwenkbaren, Rollen, die weiter als der mindestens eine Fuß und die mindestens zwei starren Rollen absenkbar sind, vorzugsweise in Längsrichtung zwischen den mindestens zwei starren Rollen und dem mindestens einen Fuß, zum Verfahren des Langgut-Handwagens quer zu seiner Längsrichtung und ein erstes Kupplungsglied einer Anhängerkupplung auf der Seite mit dem mindestens einen Fuß aufweist, und
- einen Elektro-Gabelhubwagen, der ein, vorzugsweise abnehmbares zweites Kupplungsglied der Anhängerkupplung zum Verbinden mit dem ersten Kupplungsglied und ein, vorzugsweise lösbar angebrachtes, Beschwerungsgewicht aufweist, Bedienstation mit demselben und System mit denselben.

## Beschreibung

Die vorliegende Erfindung betrifft einen Langgut-Transportwagen, eine Bedienstation zum Beschicken und Leeren von Langgutlagern mittels Langgut-Handwagen sowie ein System zum Beschicken und Leeren von Langgutlagern, umfassend selbige.

Lager für Langgut und Stabmaterial sind grundsätzlich bekannt. Zum Stabmaterial sollen hier auch beispielsweise Rohre und Profile gezählt werden. Nachfolgend soll der Begriff Langgutlager sowohl für Lager für Langgut als auch für Stabmaterial verwendet werden.

Zum Beschicken und Leeren von Langgutlagern kommen Langgut-Handwagen zum Einsatz.

Der vorliegenden Erfindung liegt die Aufgabe zugrunde, das Beschicken und Leeren von Langgutlagern zu vereinfachen.

Erfindungsgemäß wird diese Aufgabe gelöst durch einen Langgut-Transportwagen, umfassend:
- einen Langgut-Handwagen, der ein von Hand bewegbares Langgut-Fahrgestell mit mindestens einem Fuß, vorzugsweise zwei Füßen, im Bereich eines Längsendes des Langgut-Fahrgestells, mindestens zwei starren Rollen im Bereich des gegenüberliegenden Längsendes des Landgut-Fahrgestells, mindestes zwei Paaren von höhenverstellbaren, vorzugsweise schwenkbaren, Rollen, die weiter als der mindestens eine Fuß und die mindestens zwei starren Rollen absenkbar sind, vorzugsweise in Längsrichtung zwischen den mindestens zwei starren Rollen und dem mindestens einen Fuß, zum Verfahren des Langgut-Handwagens quer zu seiner Längsrichtung und ein erstes Kupplungsglied einer Anhängerkupplung auf der Seite mit dem mindestens einen Fuß aufweist, und
- einen Elektro-Gabelhubwagen, der ein, vorzugsweise abnehmbares, zweites Kupplungsglied der Anhängerkupplung zum Verbinden mit dem ersten Kupplungsglied und ein, vorzugsweise lösbar angebrachtes, Beschwerungsgewicht aufweist.

Insbesondere kann es sich um einen auf dem Boden verfahrbaren Langgut-Transportwagen handeln.

Die starren Rollen werden auch als Bockrollen bezeichnet.

Der Langgut-Transportwagen kann zur Aufnahme einer Langgut-Kassette ausgebildet sein und/oder damit ausgestattet sein.

Des Weiteren wird diese Aufgabe gelöst durch eine Bedienstation zum Beschicken und Leeren von Langgutlagern mittels Langgut-Handwagen, umfassend:
- eine Zu- und Abführschleuse für einen Langgut-Handwagen in dessen Längsbewegungsrichtung, und
- auf dem Boden trichterförmig angeordnete, nach oben vorragende Einführungsleisten zum Einführen eines Langgut-Handwagens in die Zu- und Abführschleuse.

Schließlich liefert die vorliegende Erfindung auch ein System zum Beschicken und Leeren von Langgutlagern, umfassend einen Langgut-Transportwagen nach einem der Ansprüche 1 bis 5 und eine Bedienstation nach Anspruch 6 oder 7.

Bei dem Langgut-Transportwagen kann vorgesehen sein, dass das Langgut-Fahrgestell mindestens eine Schiebestange zum manuellen Lenken des Langgut-Fahrgestells aufweist. Vorzugsweise weist das Langgut-Fahrgestell mindestens zwei derartige Schiebestangen auf, vorzugsweise wobei diese an gegenüberliegenden Längsseiten des Langgut-Fahrgestells angeordnet sind. Besonders bevorzugt können die beiden Schiebestangen an den Längsseiten genau gegenüberliegend angeordnet sein.

Vorteilhafterweise sind die Schiebestangen an dem Langgut-Fahrgestell lösbar befestigt.

Zweckmäßigerweise weist/weisen die Schiebestange(n)an ihrem oberen Ende bzw. an ihren oberen Enden einen Griff für eine Hand auf.

Gemäß einer weiteren besonderen Ausführungsform der vorliegenden Erfindung umfasst das erste Kupplungsglied eine Zugkugelkupplung oder Kugelkupplung und das zweite Kupplungsglied einen Kugelkopf. Insbesondere kann der Kugelkopf an einem Bolzen bzw. an einer Kugelstange befestigt sein.

Vorteilhafterweise weist der Elektro-Gabelhubwagen vordere Lasträder auf und ist das zweite Kupplungsglied im Bereich der vorderen Lasträder angeordnet. Besonders bevorzugt ist das zweite Kupplungsglied mittig zwischen den vorderen Lasträdern angeordnet. Dadurch wird die Manövrierbarkeit noch weiter erhöht.

Günstigerweise sind das Beschwerungsgewicht und das erste Kupplungsglied als eine an bzw. auf dem Elektro-Gabelhubwagen lösbar befestigte Einheit ausgebildet. Dies erleichtert ein Auswechseln des Elektrogabel-Hubwagens z. B. bei einer Beschädigung oder bei einem Defekt und/oder eine (zwischenzeitliche) andere Verwendung des Elektro-Gabelhubwagens.

Bei der Bedienstation kann vorgesehen sein, dass sie ferner eine quer zur Längsbewegungsrichtung des Langgut-Handwagens bewegliche Zentrierplatte zumindest zwischen den Einführungsleisten umfasst.

Der vorliegenden Erfindung liegt die überraschende Erkenntnis zugrunde, dass durch die spezielle Gestaltung des Langgut-Transportwagens der Langgut-Handwagen auch außerhalb eines Langgutlagers einfacher zu manövrieren ist und somit das Beschicken und Leeren eines Langgutlagers einfacher, insbesondere schneller möglich, ist.

Mittels der Bedienstation wird das Einschieben eines Langgut-Handwagens, insbesondere des Langgut-Handwagens des Langgut-Transportwagens gemäß einem der Ansprüche 1 bis 5, erheblich vereinfacht. Dies führt zu einer zeitlichen Ersparnis und damit zu geringeren Arbeitskosten.

Ferner lässt sich das Einschieben des Langgut-Handwagens durch eine Zentrierplatte noch weiter vereinfachen. Das hat auch noch den Nebeneffekt, dass der Verschleiß der Hauptrollen des Langgut-Handwagens verringert werden kann.

Weitere Merkmale und Vorteile der Erfindung ergeben sich anhand der beigefügten Ansprüche und der nachfolgenden Beschreibung einer besonderen Ausführungsform der vorliegenden Erfindung anhand der schematischen Zeichnungen. Damit zeigt:
- Figur 1: eine perspektivische Ansicht schräg von oben von einem System zum Beschicken und Leeren von Langgutlagern mittels Langgut-Handwagen gemäß einer besonderen Ausführungsform der vorliegenden Erfindung;
- Figur 2: eine perspektivische Ansicht schräg von oben von einem Elektro-Gabelhubwagen und einem Langgut-Handwagen des Systems von Figur 1;
- Figur 3: eine perspektivische Ansicht schräg von unten von dem Langgut-Handwagen von Figur 2;
- Figur 4: eine Seitenansicht von dem in den vorherigen Figuren gezeigten Elektro-Gabelhubwagen beim Fahren unter den in den vorangehenden Figuren gezeigten Langgut-Handwagen,
- Figur 5: eine Seitenansicht von dem Elektro-Gabelhubwagen und dem Langgut-Handwagen von Figur 4 beim Hochfahren der Gabel zum Kuppeln des Elektro-Gabelhubwagens mit dem Langgut-Handwagen;
- Figur 6: eine Seitenansicht von dem Elektro-Gabelhubwagen und dem Langgut-Handwagen von Figur 5 nach einem Absenken von zusätzlichen Lenkrollen und einem Absenken der Gabel des Elektro-Gabelhubwagens;
- Figur 7: eine perspektivische Ansicht schräg von vorne und oben von einem Elektro-Gabelhubwagen gemäß einer besonderen Ausführungsform der vorliegenden Erfindung;
- Figur 8: eine perspektivische Ansicht schräg von unten von einem hinteren Längsende eines Langgut-Handwagens gemäß einer besonderen Ausführungsform der vorliegenden Erfindung;
- Figur 9: eine Seitenansicht teilweise im Schnitt von einer Kupplung (Anhängerkupplung) zwischen dem Elektro-Gabelhubwagen gemäß Figur 7 und dem Langgut-Handwagen gemäß Figur 8;
- Figur 10a: eine perspektivische Ansicht von dem Langgut-Handwagen gemäß Figur 8;
- Figur 10b: eine Schnittansicht in der gestrichelt dargestellten Ebenein der Figur 10a; und
- Figur 11: eine Draufsicht von oben auf eine Ausrichteinrichtung einer Bedienstation zum Beschicken und Leeren von Langgutlagern mittels Langgut-Handwagen, insbesondere eines Langgut-Handwagens eines Langgut-Transportwagens gemäß einer besonderen Ausführungsform der vorliegenden Erfindung.

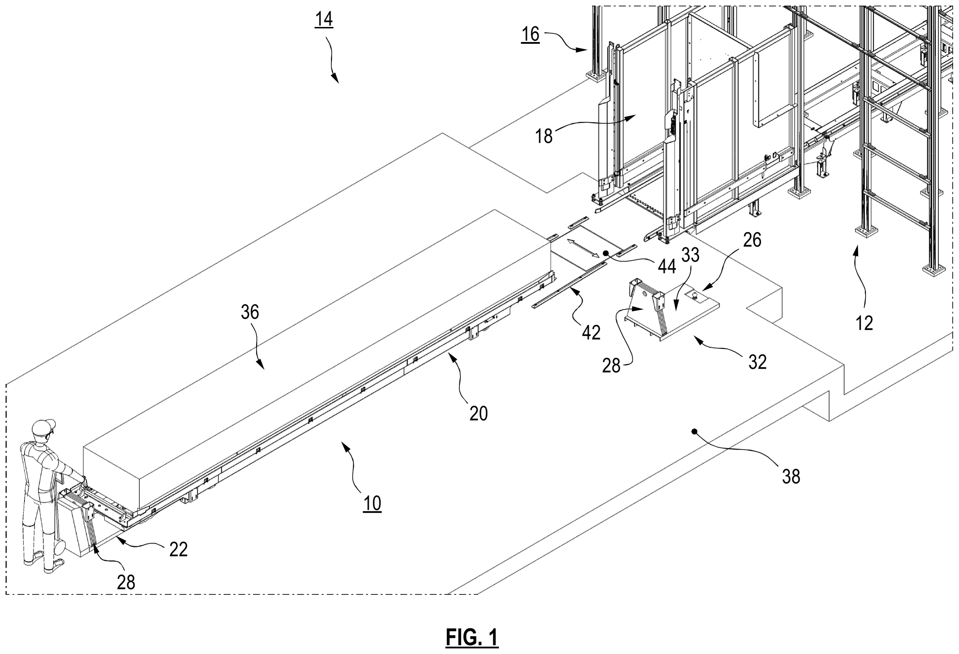

Figur 1 zeigt einen Langgut-Transportwagen 10 gemäß einer besonderen Ausführungsform der vorliegenden Erfindung im Einsatz beim Beschicken bzw. Leeren eines Langgutlagers, hier Stahlbau-Langgutlagers, 12. Der Langgut-Transportwagen 10 gehört zu einem System 14 zum Beschicken und Leeren von Langgutlagern gemäß einer besonderen Ausführungsform der vorliegenden Erfindung. Zu besagtem System 14 gehört auch eine Bedienstation 16 zum Beschicken und Leeren von Langgutlagern gemäß einer besonderen Ausführungsform der vorliegenden Erfindung. Die Bedienstation 16 weist eine Zu- und Abführschleuse (Öffnung) 18 für einen Langgut-Handwagen 20 auf. Der Langgut-Handwagen 20 gehört zum Langgut-Transportwagen 10. Genauer gesagt gehören zu besagtem Langgut-Transportwagen 10 besagter Langgut-Handwagen 20 und ein Elektro-Gabelhubwagen 22.

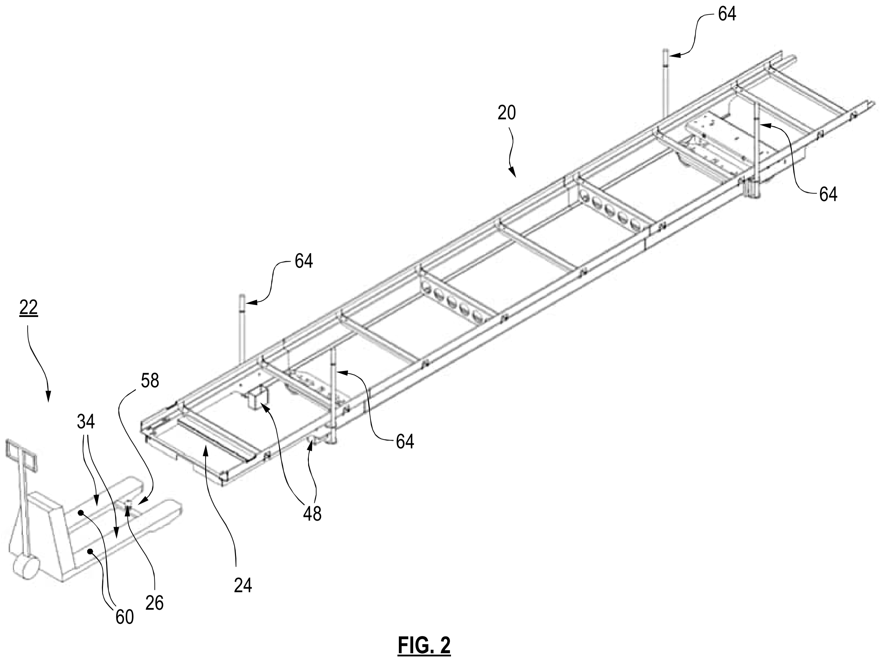

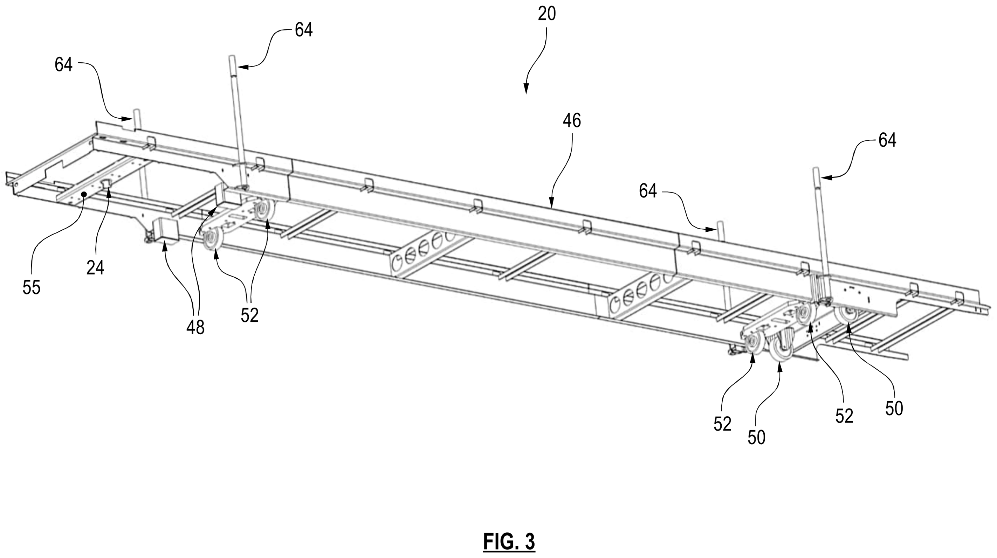

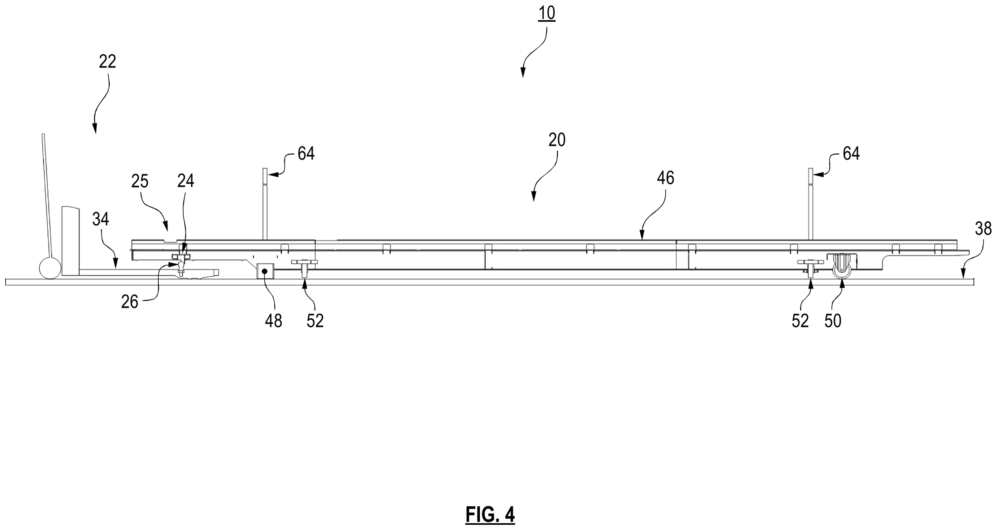

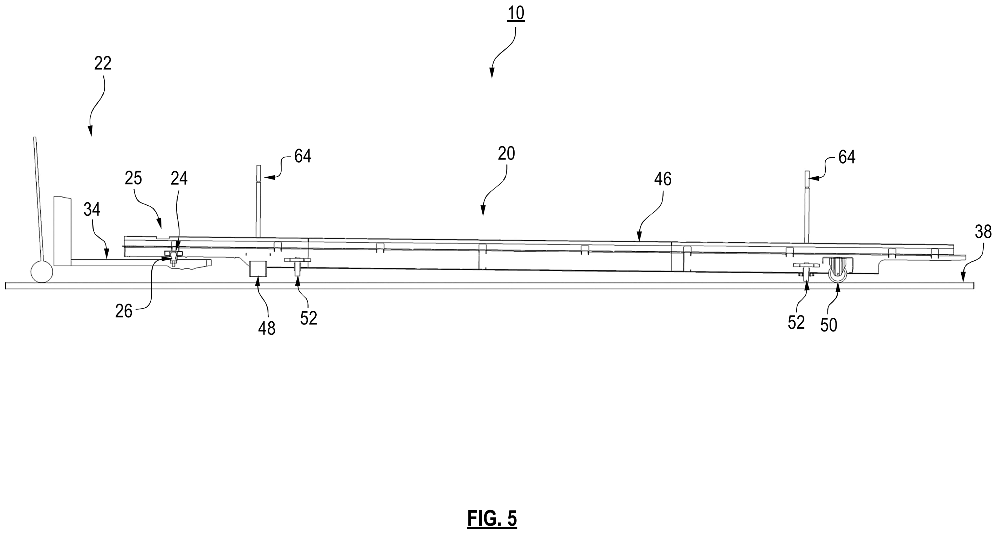

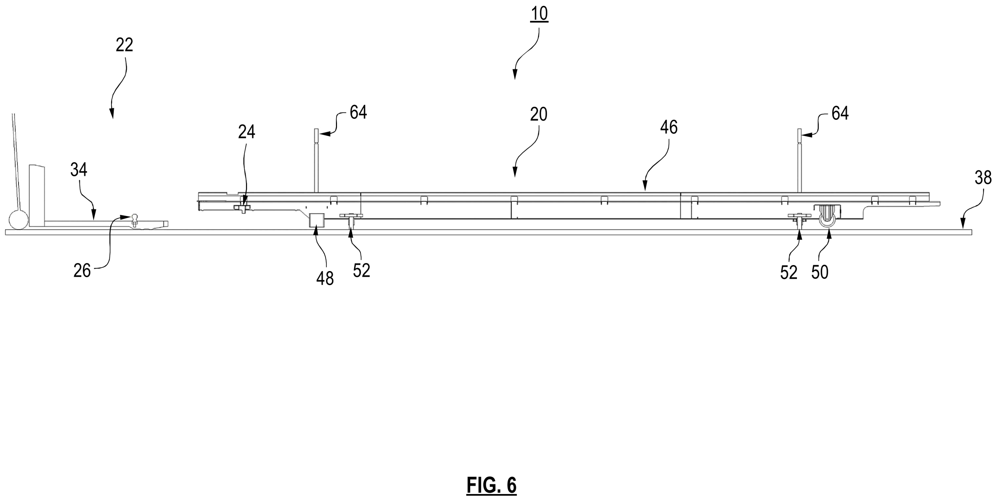

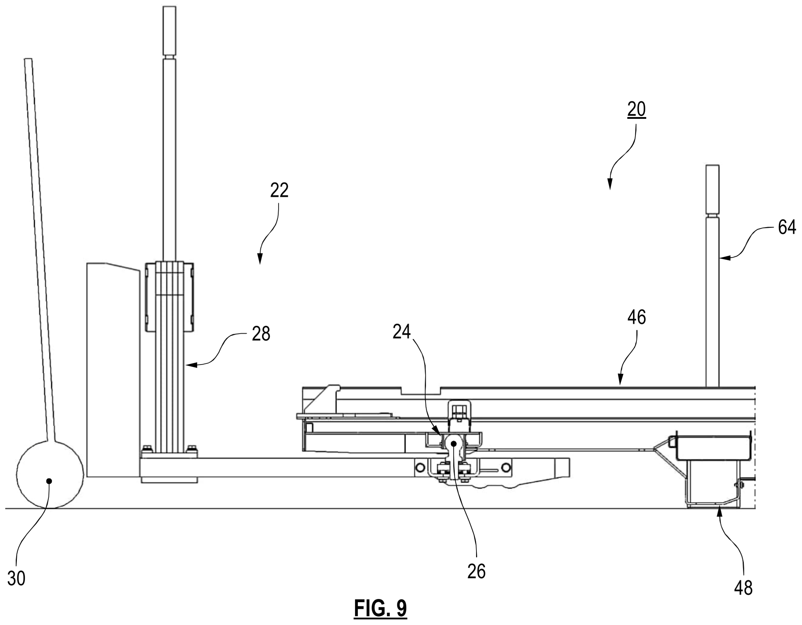

Der Langgut-Handwagen 20 weist ein erstes Kupplungsglied 24 (s. Figuren 3 bis 6, 8 und 9) einer Anhängerkupplung 25 (s. Figuren 4 und 5) auf und der Elektro-Gabelhubwagen 22 weist ein zweites Kupplungsglied der Anhängerkupplung 25 26 (s. auch Figuren 2, 4 bis 7 und 9) zum Verbinden mit dem ersten Kupplungsglied 24 sowie ein Beschwerungsgewicht 28 auf. Das Beschwerungsgewicht 28 dient zum Beschweren von (hinteren) Antriebsrollen 30 (s. Figuren 1, 2, 4 bis 6 und 9), um eine Antriebskraft des Elektro-Gabelhubwagens 22 "auf den Boden" zu übertragen. Anders ausgedrückt, sollen die Antriebsrollen, wenn möglich, nicht durchdrehen.

In der Figur 1 ist zusätzlich separat und beispielhaft gezeigt, dass das Beschwerungsgewicht 28 und das zweite Kupplungsglied 26 als eine auf dem Elektro-Gabelhubwagen lösbar befestigte Einheit 32 mit einer horizontalen Plattform 33 ausgebildet sein können. Genauer gesagt kann die Gabel 34 des Elektro-Gabelhubwagens 22 unter die Plattform 33 der Einheit 32 gefahren und zur Aufnahme der Einheit 32 verwendet werden. Besagte Einheit 32 ist mittels der höhenverstellbaren Gabel 34 anhebbar und absenkbar. Wie sich weiterhin aus der Figur 1 ergibt, ist der Langgut-Transportwagen 10 mit einem Langgut 36 in seiner Längsrichtung beladen.

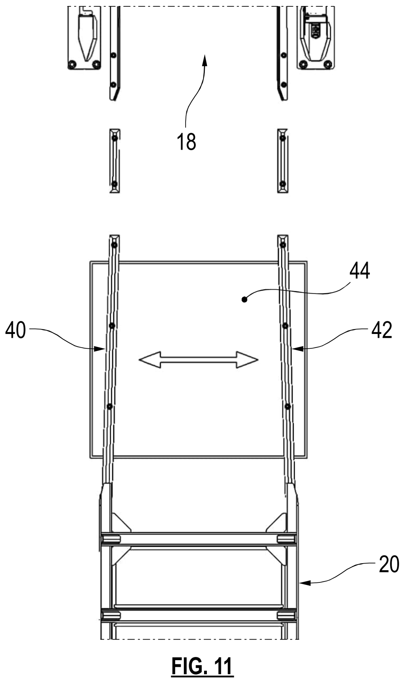

Die Bedienstation 16 weist auf dem Boden 38 trichterförmig angeordnete, nach oben vorragende Einführungsleisten 40 und 42 (s. a. Figur 11) zum Einfädeln des Langgut-Handwagens 20 in die Zu- und Abführschleuse 18 sowie eine quer zur Längsbewegungsrichtung des Langgut-Handwagens 20 bewegliche Zentrierplatte 44 zwischen den Einführungsleisten 40 und 42 auf. Die Zentrierplatte 44 kann sich auch unterhalb der Einführungsleisten 40 und 42 zu beiden Seiten nach außen hinaus erstrecken. Wie sich insbesondere anhand der Figuren 2 und 3 ergibt, weist der Langgut-Handwagen 20 ein von Hand bewegbares Langgut-Fahrgestell 46 mit zwei Füßen 48 zum Abstellen auf. Die Füße 48 befinden sich im Bereich des Längsendes des Langgut-Fahrgestells 46 an dem sich auch das zweite Kupplungsglied 26 befindet. Die Füße 48 befinden sich an den beiden Längsseiten des Langgut-Fahrgestells 46 und liegen sich gegenüber.

Darüber hinaus weist das Langgut-Fahrgestell 46 an seinem Längsende gegenüber dem Längsende mit dem ersten Kupplungsglied 24 zwei quer zur Längsrichtung des Langgut-Fahrgestells 46 im Abstand zueinander angeordnete starre Rollen (Hauptrollen) 50 auf.

Des Weiteren weist das Langgut-Fahrgestell 46 sowohl im Bereich seines Längsendes mit dem ersten Kupplungsglied 24 als auch im Bereich seines Längsendes mit den Rollen 50 jeweils ein zusätzliches Paar von starren Rollen 52 auf. Die zusätzlichen Rollen 52 sind jeweils quer zur Längsrichtung des Langgut-Fahrgestells 46 im Abstand zueinander angeordnet und absenkbar. Vorzugsweise befinden sich die beiden Paare von zusätzlichen Rollen 52 in Längsrichtung des Langgut-Fahrgestells 46 zwischen den Füßen 48 und den Rollen 50.

Die absenkbaren Rollen 52 sind so weit absenkbar, dass sie von dem Langgut-Fahrgestell 46 nach unten über die Füße 48 und die Rollen 50 hervorstehen, um bei Bedarf das Langgut-Fahrgestell 46 und damit den Langgut-Handwagen 20 darüber rollen und manövrieren zu können.

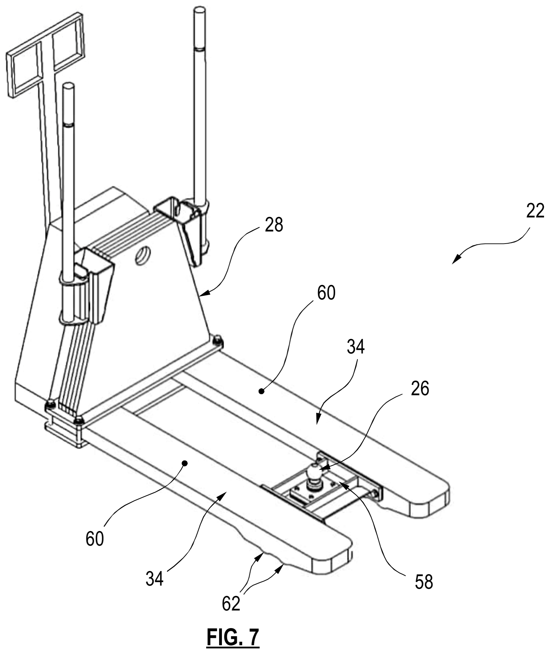

Des Weiteren ergibt sich insbesondere aus den Figuren 2, 3, 8 und 9, dass das erste Kupplungsglied 24 des Langgut-Handwagens 20 eine Zugkugelkupplung , in diesem Beispiel in Form einer Öffnung/Öse, in einer Querstrebe 55 im Langgut-Fahrgestell 46 und das zweite Kupplungsglied 26 des Elektro-Gabelhubwagens 22 einen Kugelkopf aufweist. In diesem Beispiel ist der Kugelkopf auf einer Querstrebe 58 mittig zwischen den Zinken 60 der Gabel 34 und im Bereich der vorderen Lasträder 62 des Elektro-Gabelhubwagens 22 angeordnet (s. Figur 7).

Des Weiteren ergibt sich insbesondere aus den Figuren 2 und 3, dass an den Längsseiten des Langgut-Fahrgestells 46 jeweils im Bereich eines jeweiligen Längsendes zwei Schiebestangen 64 zum manuellen Lenken des Langgut-Fahrgestells 46 vorgesehen sind. Genauer gesagt sind in diesem Beispiel die Schiebestangen 64 paarweise gegenüberliegend an den Längsseiten angeordnet.

Die Figuren 4 bis 6 zeigen ein Zusammenstellen des Langgut-Transportwagens 10 aus dem Langgut-Handwagen 20 und dem Elektro-Gabelhubwagen 22 sowie die Verwendung des resultierenden Langgut-Transportwagens 10.

Der Elektro-Gabelhubwagen 22 fährt unter den Langgut-Handwagen 20 (Figur 4). Der Elektro-Gabelhubwagen 22 bzw. seine Gabel 34 wird hochgefahren und nimmt über die Anhängerkupplung 25 (erstes Kupplungsglied 24 und zweites Kupplungsglied 26) den Langgut-Handwagen 20 auf; die (hinteren) Füße 28 von Langgut-Handwagen 20 haben keinen Kontakt mehr zum Boden 38 (Figur 5).

Der Langgut-Handwagen 20 wird mittels des Elektromotors (nicht gezeigt) des Elektro-Gabelhubwagens 22 aus dem Langgutlager (mit Beladung) durch die Bedienstation herausgezogen und kann frei zum Beispiel in einer Halle verfahren werden. Der Langgut-Handwagen 20 kann zum Beispiel zu einem Arbeitsplatz/zu einer Bearbeitungszelle gefahren werden. Dort wird der Langgut-Handwagen 20 mittels des Elektro-Gabelhubwagens 22 heruntergelassen. Der Elektro-Gabelhubwagen 22 kann dann zum Beispiel für den Transport eines anderen Langgut-Handwagens oder für Standardaufgaben verwendet werden. Durch die Absenkbewegung mittels der Gabel 34 und durch das Aufsetzen der Füße 48 auf dem Boden 38 wird der Langgut-Handwagen 20 automatisch gegen Wegrollen gesichert.

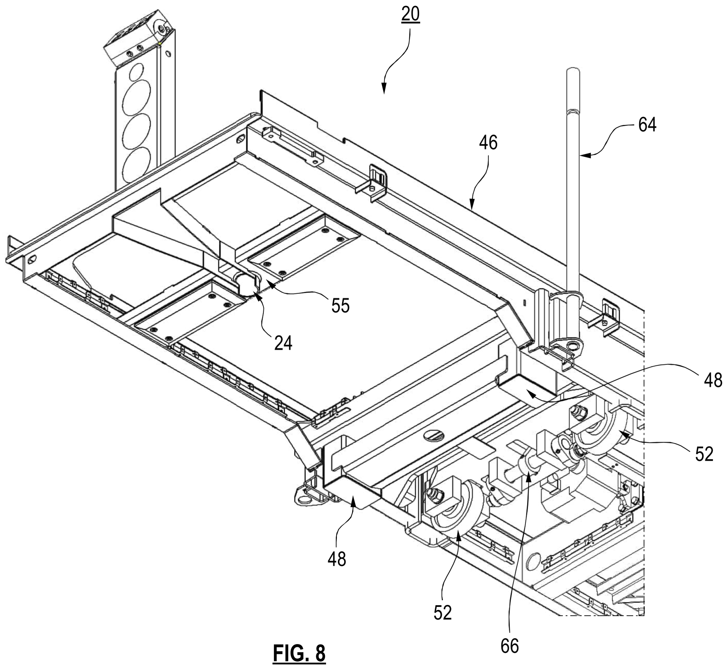

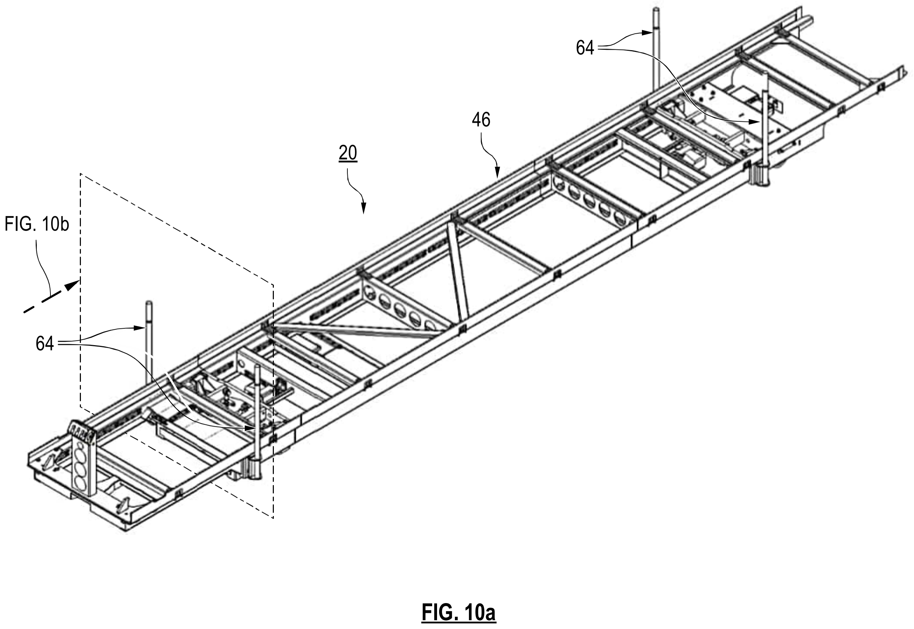

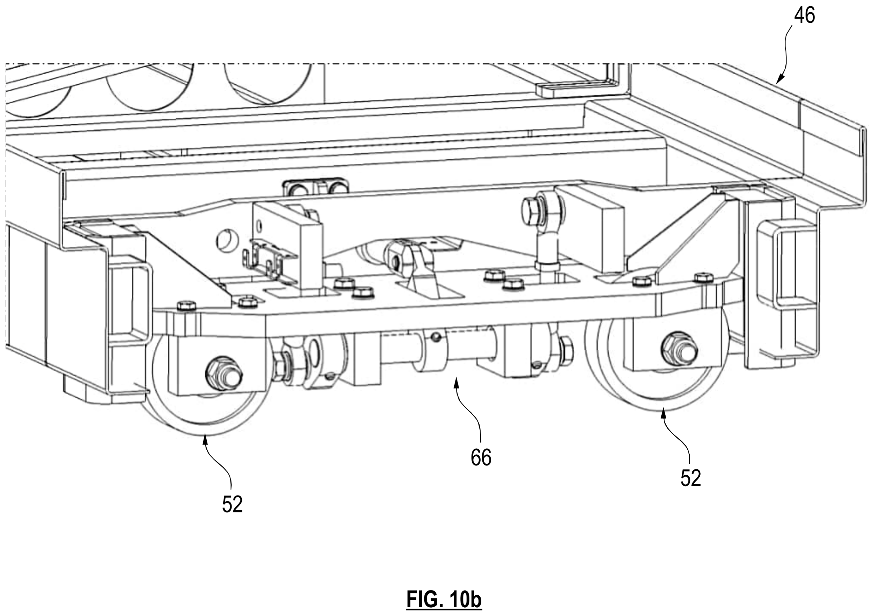

Es können nun die zusätzlichen Rollen 52, die lenkbar sind, durch eine Hebeeinrichtung 66 (s. Figuren 8 und 10a sowie 10b) abgesenkt werden. Der Langgut-Handwagen 20 hebt sich dabei von den Rollen (Hauptrollen) 50 ab und kann anschließend zum Beispiel 90° zur Hauptbewegungsrichtung gefahren werden. Die Rollen 50 und die (hinteren) Füße 48 haben keinen Kontakt mehr zum Boden 38 (siehe Figuren 4 bis 6). Es ist dadurch somit ein omnidirektionaler Betrieb möglich.

Nach der Entnahme der Ladung kann der Langgut-Handwagen 20 vom Arbeitsplatz zum Beispiel von Hand weggeschoben werden. Die Rollen 52 können hochgefahren werden, so dass der Langgut-Handwagen 20 wieder auf den Rollen 50 und auf den Füßen 48 steht. Der Elektro-Gabelhubwagen 22 kann dann wieder unter den Langgut-Handwagen 20 gefahren und das zweite Kupplungsglied 26 kann wieder mittels der Gabel 34 hochgefahren werden. Nach der Herstellung der Kupplungsverbindung kann der Langgut-Handwagen 20 wieder zum Beispiel zur Bedienstation 16 gebracht werden.

Wie sich aus den Figuren 1 und 11 ergibt, lässt sich der Langgut-Handwagen 20 beim Einschieben in die Bedienstation 16 über die bewegliche Zentrierplatte 44 und einen Ausrichttrichter in Form der trichterförmig angeordneten Einführungsleisten 40 und 42 ausrichten. Hierdurch wird das Einführen des Langgut-Handwagens 20 in die Bedienstation 16 erheblich vereinfacht.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

### Bezugszeichenliste

- 10: Langgut-Transportwagen
- 12: Langgutlager
- 14: System
- 16: Bedienstation
- 18: Zu- und Abführschleuse
- 20: Langgut-Handwagen
- 22: Elektro-Gabelhubwagen
- 24: erstes Kupplungsglied
- 25: Anhängerkupplung
- 26: zweites Kupplungsglied
- 28: Beschwerungsgewicht
- 30: Antriebsrollen
- 32: Einheit
- 33: Plattform
- 34: Gabel
- 36: Langgut
- 38: Boden
- 40, 42: Einführleiste
- 44: Zentrierplatte
- 46: Langgut-Fahrgestell
- 48: Fuß
- 50: Rolle
- 52: Rolle
- 55: Querstrebe
- 58: Querstrebe
- 60: Zinke
- 62: Lastrad
- 64: Schiebestange
- 66: Hebeeinrichtung

## Patentansprüche

1. Langgut-Transportwagen (10), umfassend:
- einen Langgut-Handwagen (20), der ein von Hand bewegbares Langgut-Fahrgestell (46) mit mindestens einem Fuß (48), vorzugsweise zwei Füßen, im Bereich eines Längsendes des Langgut-Fahrgestells (46), mindestens zwei starren Rollen (50) im Bereich des gegenüberliegenden Längsendes des Landgut-Fahrgestells (46), mindestes zwei Paaren von höhenverstellbaren, vorzugsweise schwenkbaren, Rollen (52), die weiter als der mindestens eine Fuß (48) und die mindestens zwei starren Rollen (50) absenkbar sind, vorzugsweise in Längsrichtung zwischen den mindestens zwei starren Rollen (50) und dem mindestens einen Fuß (48), zum Verfahren des Langgut-Handwagens (20) quer zu seiner Längsrichtung und ein erstes Kupplungsglied (24) einer Anhängerkupplung (25) auf der Seite mit dem mindestens einen Fuß (48) aufweist, und
- einen Elektro-Gabelhubwagen (22), der ein, vorzugsweise abnehmbares zweites Kupplungsglied (26) der Anhängerkupplung (25) zum Verbinden mit dem ersten Kupplungsglied (24) und ein, vorzugsweise lösbar angebrachtes, Beschwerungsgewicht (28) aufweist.

2. Langgut-Transportwagen (10) nach Anspruch 1, wobei das Langgut-Fahrgestell (46) mindestens eine Schiebestange (64) zum manuellen Lenken des Langgut-Fahrgestells (46) aufweist.

3. Langgut-Transportwagen (10) nach Anspruch 1 oder 2, wobei das erste Kupplungsglied (24) eine Zugkugelkupplung oder Kugelkupplung und das zweite Kupplungsglied (26) einen Kugelkopf aufweist.

4. Langgut-Transportwagen (10) nach einem der vorangehenden Ansprüche, wobei der Elektro-Gabelhubwagen (22) vordere Lasträder (62) aufweist und das zweite Kupplungsglied (26) im Bereich der vorderen Lasträder (62) angeordnet ist.

5. Langgut-Transportwagen (10) nach einem der vorangehenden Ansprüche, wobei das Beschwerungsgewicht (28) und das erste Kupplungsglied (24) als eine an bzw. auf dem Elektro-Gabelhubwagen (22) lösbar befestigte Einheit (32) ausgebildet sind.

6. Bedienstation (16) zum Beschicken und Leeren von Langgutlagern (12) mittels Langgut-Handwagen (20), umfassend:
- eine Zu- und Abführschleuse (18) für einen Langgut-Handwagen (20) in dessen Längsbewegungsrichtung, und
- auf dem Boden (38) trichterförmig angeordnete, nach oben vorragende Einführungsleisten (40, 42) zum Einfädeln eines Langgut-Handwagens (20) in die Zu- und Abführschleuse (18).

7. Bedienstation (16) nach Anspruch 6, ferner umfassend
eine quer zur Längsbewegungsrichtung des Langgut-Handwagens (20) bewegliche Zentrierplatte (44) zumindest zwischen den Einführungsleisten (40,42).

8. System (14) zum Beschicken und Leeren von Langgutlagern (12), umfassend einen Langgut-Transportwagen (10) nach einem der Ansprüche 1 bis 5 und eine Bedienstation (16) nach Anspruch 6 oder 7.
